# EUROPEAN PATENT SPECIFICATION

(11) **EP 4 475 485 B1**
(45) Date of publication and mention of the grant of the patent: **06.08.2025**
(21) Application number: 23212120.2
(22) Date of filing: 24.11.2023
(51) Int. Cl.: H04L 9/40, H04L 61/4511, H04L 9/32

(54) **SECURE COMMUNICATIONS NETWORK PROTOCOL**
SICHERES KOMMUNIKATIONSNETZWERKPROTOKOLL
PROTOCOLE DE RÉSEAU DE COMMUNICATION SÉCURISÉ

(30) Priority: 06.06.2023 GB 202308438
(43) Date of publication of application: 11.12.2024
(73) Proprietor: Mastercard International Incorporated, Purchase NY 10577 (US)
(72) Inventor: Yardley, Andy, London, E14 9HL (GB); Johnson, Alan, Maldon, CM9 8HW (GB); Phillips, Simon, York, YO30 6LN (GB)
(74) Representative: Gill Jennings & Every LLP

(56) References cited:
- CN-B- 105 681 047
- US-A1- 2017 250 797

## Description

### FIELD OF THE INVENTION

The present invention relates to a method of exchanging sensitive data across a public network. An application in which the invention finds particular benefit is when making a real time payment, in particular using a secure cryptographic decentralized open-internet communications schema.

### BACKGROUND

Secure communication over the public internet is of paramount importance, be it for example for secure payments, transfer of confidential medical data, or important legal documents.

Existing solutions typically rely on pre-shared keys or certifications from trusted certificate authorities. Cryptographic keys and digital signatures can be used to provide a secure communication system over a public internet network. In public-private key pair cryptographic systems, the key pair includes a private key and a corresponding public key. The public keys can be published or otherwise shared to other participants in the communication system. The private key cannot be determined with only the public key.

However, a problem with known solutions is that these cryptographic keys can be difficult to manage, particularly in large networks of many servers where each server has their own keys and thus requiring complex operational processes and significant computing resources.

The present invention aims to enable an improved secure communications network system. Prior art document US 2017/250797 A1 teaches secure and delegated distribution of private keys via the Domain Name Service to validate the originator of a message against the message's purported identity in order to eliminate fraudulent messages.

### SUMMARY OF INVENTION

The scope of the invention is set out in the appended claims.

In a first aspect of the present disclosure, there is provided a computer-implemented method for onboarding a participant entity to a secure communications network system comprising a central signing service in a public network, the method performed by the central signing service and comprising the steps of: obtaining a domain name for the participant entity; storing the domain name in a data store of the central signing service; generating a domain name system, DNS, signature and an access token for the domain name; and sending the DNS signature and the access token to the participant entity.

In the present disclosure, a "zero-trust" communications scheme is provided where messages may only be sent between two parties if each party participates in a central signing service. Accordingly, in order for a party or entity to participate in the central signing service to send messages in the present secure communications network system, the party can onboard into the central signing service according to the first aspect.

Preferably, the method of claim further comprising the steps of: receiving, from the participant entity, an endpoint signature request, wherein the endpoint signature request comprises the access token; validating the access token; looking up the domain name for the participant entity; retrieving a configuration of an unsigned endpoint of the participant entity associated with the domain name, wherein the configuration comprises a public key of the participant entity, wherein the public key is of a key pair configured to be valid for a predetermined period of time; generating an endpoint signature; and sending the endpoint signature to the participant entity.

Preferably, the predetermined period of time is between 12 hours to 48 hours, more preferably wherein the predetermined period of time is 24 hours. Alternatively, the predetermined time period may be a shorter or longer period of time, for example 6 hours or 36 hours, or even 168 hours. As will be understood, the predetermined period of time is a time period that is preset, selected or fixed for a key pair to define its period of validity. The predetermined time period starts when a new key pair is generated and the key pair becomes invalid after the set amount of time has passed.

In this way, when the participant entity requests an endpoint signature from the central signing service, the central signing service may use the access token received from the participant entity to validate the participant entity and look up relevant domain name information. The access token may be configured to permit the participant entity to request an endpoint signature from the central signing service. In this way, the central signing service may only proceed with an endpoint signature request if an access token is provided in the endpoint signature request message.

Preferably, the DNS signature is configured for validating the onboarding of the participant entity in the secure communications network system. In this way, another participant entity wishing to communicate with the first participant entity may utilise the DNS signature of the first participant entity to confirm or validate whether the first participant entity is part of, i.e. has onboarded into, the present secure communications network system.

Preferably, the central signing service comprises a key pair comprising a private key and a public key, and wherein central signing service uses the private key to generate the DNS signature. The central signing service may use elliptic curve cryptography keys. Preferably, the central signing service is further configured to provide the public key for validating the DNS signature. The public key of the central signing service may be used by one participant entity to verify the DNS signature of another participant entity.

In a second aspect of the present disclosure, there is provided a computer-implemented method for onboarding a participant entity to a secure communications network system comprising a central signing service in a public network, the method performed by the participant entity and comprising the steps of: receiving a domain name system, DNS, signature and an access token for the domain name; storing the access token in a data store of the participant entity; and storing the DNS signature in a data store in a DNS. In this way, an entity can participate in the present secure communications network system. Preferably, the method further comprises the participant entity sending an onboarding request to the central signing service for a domain name.

Preferably, the method further comprises the steps of: generating a key pair comprising a private key and a public key, wherein the key pair is configured to be valid for a predetermined period of time; storing the public key in a configuration of an endpoint of a domain associated with the participant entity, wherein the endpoint is unsigned; sending an endpoint signature request to the central signing service, the endpoint signature request comprising the access token; receiving an endpoint signature from the central signing service; and merging the endpoint signature with the configuration of the unsigned endpoint to provide a signed endpoint. Preferably, the predetermined period of time is between 12 hours to 48 hours, more preferably wherein the predetermined period of time is 24 hours.

The approved domain names are stored at the central signing service and the access token allows the domain names to be looked up / searched. Preferably, the access token is configured to permit the participant entity to request an endpoint signature from the central signing service.

Preferably, the DNS signature is configured for validating the onboarding of the participant entity in the secure communications network system. In this way, the DNS signature allows a participant entity's participation/onboarding into the secure communications network to be verified or validated by another party.

Preferably, the endpoint is a uniform resource location. Preferably, the uniform resource locator starts with a prefix /.well-known/. Well-known endpoints, well-known uniform resource identifiers, and uniform resource locators or "web addresses" are defined by the Internet Engineering Task Force (IETF) in RFC8615. A validation request may comprise an ACME DNS-01 challenge.

In a third aspect of the present disclosure, there is provided a system for onboarding a participant entity to a secure communications network system comprising a central signing service for performing secure communications over a public network, wherein the central signing service is configured to perform the method according to the first aspect and the participant entity is configured to perform the method according to the second aspect.

In a fourth aspect of the present disclosure, there is provided a non-transitory computer-readable medium storing instructions that are operable when executed by data processing apparatus of a central signing service in a secure communications system to perform the method according to the first aspect and/or when executed by data processing apparatus of a participant entity in the secure communications system to perform the method according to the second aspect.

According to fifth aspect of the present disclosure, there is provided a computer-implemented method for generating a digital signature for a participant entity of a secure communications network system comprising a central signing service in a public network, the method performed by the central signing service and comprising the steps of: receiving an endpoint signature request from the participant entity for an endpoint of a domain associated with the participant entity, the endpoint signature request comprising a domain name and an access token of the participant entity; validating the access token and looking up the domain name in a data store of the central signing service; retrieving a domain name system, DNS, signature of the participant entity from a data store in a DNS; and validating the DNS signature using a private key of a key pair of the central signing service, where on successful validation of the DNS signature, the method further comprises the steps of: retrieving a configuration of the endpoint; generating an endpoint signature from the configuration of the endpoint; and sending the endpoint signature to the participant entity.

In this way, a participant entity that has onboarded to the central signing service can request an endpoint signature to be generated for the participant's endpoint. Another party, who is also a participant of the central signing service, can then validate the endpoint by checking the endpoint signature with the central signing service.

Preferably, the configuration of the endpoint comprises a public key of the participant entity, and wherein the public key is of a key pair configured to be valid for a predetermined period of time. In this way, the endpoint includes a time-sensitive public key which improves the security of the participant's endpoint. This reduces the potential impact of key theft or unauthorised access or use of keys as well as allows for immediate revocation of keys should any fraudulent activity be detected. In addition, the short lifetime or duration of keys minimises the window of opportunity for an attacker to compromise the keys, thus enhancing the overall security of the communications network Preferably, the predetermined period of time is between 12 hours to 48 hours, more preferably wherein the predetermined period of time is 24 hours. Alternatively, the predetermined time period may be a shorter or longer period of time, for example 6 hours or 36 hours, or even 168 hours.

Preferably, the central signing service generates the endpoint signature using a private key of a second key pair of the central signing service, wherein the key pair of central signing service for validating the DNS signature is a first key pair. Preferably, the first key pair is the same as the second key pair.

Preferably, looking up the domain name comprises identifying name servers of the domain associated with the participant entity. Preferably, the method further comprises: retrieving the name servers from the DNS; and validating the retrieved name servers against name servers stored in a data store in the central signing service.

Preferably, the private key used to validate the DNS signature was previously used to generate the DNS signature.

According to sixth aspect of the present disclosure, there is provided a computer-implemented method for providing a signed endpoint for a participant entity of a secure communications network system comprising a central signing service in a public network, the method performed by the participant entity and comprising the steps of: generating a key pair comprising a private key and a public key, wherein the key pair is configured to be valid for a predetermined period of time; storing the public key in a configuration of an endpoint of a domain associated with the participant entity, wherein the endpoint in unsigned; sending an endpoint signature request to the central signing service, the endpoint signature request comprising a domain name and an access token of the participant entity; sending the configuration of the unsigned endpoint to the central signing service; receiving an endpoint signature for the configuration from the central signing service; and merging the endpoint signature with the configuration of the unsigned endpoint to provide the signed endpoint.

It has been advantageously found that a short predetermined time period provides an optimal balance of security and computational resource. Short-lived encryption key pairs, such as elliptic curve cryptography keys provide several security benefits. First, short-lived keys reduce the reliance on Hardware Security modules, HSMs, which are used in many server-based networks for key protection since the short-lived keys have a limited lifespan and do not persist for an extended period of time. The potential impact of key theft or unauthorised access or use of keys can be effectively minimised as well as allows for immediate or rapid revocation of keys should any fraudulent activity be detected. The short lifetime or duration of keys also minimises the window of opportunity for an attacker to compromise the keys, thus enhancing the overall security of the communications network.

Another benefit of regular key rotation / replacement is that a participant server system can significantly reduce the use and reliance on Hardware Security Modules, HSMs since the key pair is refreshed or regenerated at predetermined time periods.

Preferably, the predetermined period of time is between 12 hours to 48 hours, more preferably wherein the predetermined period of time is 24 hours. Alternatively, the predetermined time period may be a shorter or longer period of time, for example 6 hours or 36 hours, or even 168 hours. By continually refreshing or rotating a public-private key pair every predetermined period of time, for example every 24 hours, the present zero-trust communication scheme enhances forward secrecy. Previous key pairs may be revoked and discarded such that storage space can be freed and redundant key pairs can effectively be invalidated. This means that regular key rotation ensures that even if a current key is compromised, past communications remain secure. Each key pairs' short lifespan also minimises the risk of long-term compromise as any decryption attempts on previous communications would be rendered ineffective with the newly generated / rotated keys and any secure communications would only exist with the intended participants.

Accordingly, the present scheme significantly strengthens the security of the communication channel, reduces the impact of potential key compromise, and makes any attempt to compromise the keys less attractive to an attacker.

Preferably, the method further comprises: revoking a previous private key and a previous public key of a previous key pair associated with the participant entity on generating the key pair.

Preferably, the endpoint is a uniform resource location. Preferably, the uniform resource locator starts with a prefix /.well-known/. Well-known endpoints, well-known uniform resource identifiers, and uniform resource locators or "web addresses" are defined by the Internet Engineering Task Force (IETF) in RFC8615. A validation request may comprise an ACME DNS-01 challenge.

According to a seventh aspect of the present disclosure, there is provided a system for providing a signed endpoint for a participant entity to a secure communications network system comprising a central signing service for performing secure communications over a public network, wherein central signing service is configured to perform the method according to the sixth aspect and the participant entity is configured to perform the method according to the seventh aspect.

According to an eighth aspect of the present disclosure, there is provided a non-transitory computer-readable medium storing instructions that are operable when executed by data processing apparatus of a central signing service in a secure communications system to perform the method according to the sixth aspect and/or when executed by a data processing apparatus of a participant entity in the secure communications system to perform the method according to the seventh aspect.

According to a ninth aspect of the present disclosure, there is provided a computer-implemented method for performing secure communications between a first participant of a central signing service in a secure communications network system and a second participant of the central signing service over a public network, the method performed by the first participant comprising the steps of: generating a request message to send to the second participant; retrieving a domain name system, DNS, signature from a text, TXT, record from a domain associated with the second participant; retrieving a first public key, wherein the first public key is associated with the central signing service and part of a first key pair used to generate the DNS signature; validating the DNS signature against the first public key; upon successful validation of the DNS signature, retrieving a second public key and an endpoint signature from an endpoint associated with the second participant, wherein the endpoint signature is generated by the central signing service using the first key pair, and wherein the second public key is associated with the second participant and configured to be valid for a first predetermined time period; validating the endpoint signature using the first public key; upon successful validation of the endpoint signature; encrypting the request message using the second public key; signing the encrypted request message with a request signature using a private key, wherein the private key is associated with the first participant and configured to be valid for a second predetermined time period; sending the signed encrypted request message to the second participant, wherein the signed encrypted request message comprises the request signature and a domain name associated with the first participant; receiving a signed encrypted response message from the second participant; validating the signed encrypted response message using the second public key; decrypting the signed encrypted response message using the private key; and processing the signed decrypted response message, wherein the sending of the signed encrypted request message is within both the first predetermined time period and the second predetermined time period.

In traditional trust-based communication models, keys which are long-lived and pre-shared or a bearer token with a long-lived token is provisioned through an authentication flow. In the present disclosure request messages and response messages are encrypted using short-lived encryption keys having a predetermined valid time period. Advantageously, each request and response message is verified or validated as being authentic without any pre-sharing of keys or the use of long-lived tokens. The present disclosure thus combines the strengths of hosting signed public keys on an endpoint and validation techniques to provide the zero-trust communications scheme, where the participants have no prior knowledge of each other.

Preferably, each of the first predetermined time period and/or the second predetermined time period is between 12 hours to 48 hours, more preferably wherein each predetermined period of time is 24 hours. Alternatively, the predetermined time period may be a shorter or longer period of time, for example 6 hours or 36 hours, or even 168 hours. A public-private key pair having a short predetermined period of time, for example a rotational period of 24 hours, enhances forward secrecy in the present zero-trust communication scheme.

Each key pairs' short lifespan minimises the risk of long-term compromise as any decryption attempts on previous communications would be rendered ineffective with the newly generated / rotated keys and any secure communications would only exist with the intended participants. This means that even if a current key is compromised, frequent key rotation ensures that past communications remain secure. Preferably, the method further comprises: generating a key pair associated with the first participant, the key pair comprising the private key and a corresponding public key, wherein the key pair is configured to be valid for the second predetermined period of time.

Preferably, the method further comprises: revoking a previous private key and a previous public key of a previous key pair associated with the first participant on generating the key pair. Previous key pairs may be revoked and discarded such that storage space can be freed and redundant key pairs can effectively be invalidated.

Preferably, the method further comprises: storing the corresponding public key in a configuration of an endpoint of a domain associated with the first participant. Preferably, the method further comprises: receiving an endpoint signature for a configuration of the endpoint of the domain associated with the first participant from the central signing service; and merging the endpoint signature with the configuration to provide a signed endpoint associated with the first participant.

According to a tenth aspect of the present disclosure, there is provided a computer-implemented method for performing secure communications between a first participant of a central signing service and a second participant of the central signing service over a public network, the method performed by the second participant comprising the steps of: receiving a signed encrypted request message from the first participant, wherein the signed encrypted request message comprises a request signature and a domain name associated with the first participant; extracting the domain name and the request signature from the signed encrypted request message, the domain name associated with a domain, the domain associated with the first participant; retrieving a domain name system, DNS, signature from a text, TXT, record from the domain; retrieving a first public key, wherein the first public key is associated with the central signing service and part of a first key pair used to generate the DNS signature; validating the DNS signature against the first public key; upon successful validation of the DNS signature, retrieving a second public key and an endpoint signature from an endpoint associated with the first participant, wherein the endpoint signature is generated by the central signing service using the first key pair, and wherein the second public key is associated with the first participant and configured to be valid for a first predetermined time period; validating the endpoint signature using the first public key; upon successful validation of the endpoint signature; validating the request signature using the second public key; upon successful validation of the request signature; decrypting the signed encrypted request message using a private key, wherein the private key is associated with the second participant and configured to be valid for a second predetermined time period; processing the signed decrypted request message; generating a response message to send to the first participant; encrypting the response message using the second public key; signing the encrypted response message with a response signature using the private key; and sending the signed encrypted response message to the first participant, wherein the signed encrypted response message comprises the response signature, wherein the sending of the signed encrypted response message is within both the first predetermined time period and the second predetermined time period. In this way the second participant can securely validate the first participant's participation in the central signing service before decrypting the first participant's request message. The second participant can then process the request message and prepare an encrypted response message for the first participant. Each request and response message is verified or validated as being authentic without any pre-sharing of keys or the use of long-lived tokens, thereby combining the strengths of hosting signed public keys on a endpoint and validation techniques to provide a secure zero-trust communications scheme.

Preferably, each of the first predetermined time period and/or the second predetermined time period is between 12 hours to 48 hours, more preferably wherein each predetermined period of time is 24 hours. Alternatively, the predetermined time period may be a shorter or longer period of time, for example 6 hours or 36 hours, or even 168 hours. Preferably, the method further comprises: generating a key pair associated with the second participant, the key pair comprising the private key and a corresponding public key, wherein the key pair is configured to be valid for the second predetermined period of time.

Preferably, the method further comprises: revoking a previous private key and a previous public key of a previous key pair associated with the second participant on generating the key pair. Previous key pairs may be revoked and discarded such that storage space can be freed and redundant key pairs can effectively be invalidated.

Preferably, the method further comprises: storing the corresponding public key in a configuration of an endpoint of a domain associated with the second participant. Preferably, the method further comprises: receiving an endpoint signature for a configuration of the endpoint of the domain associated with the second participant from the central signing service; and merging the endpoint signature with the configuration to provide a signed endpoint associated with the second participant.

Preferably, the endpoint is a uniform resource location starting with a prefix /.well-known/. Well-known endpoints, well-known uniform resource identifiers, and uniform resource locators or "web addresses" are defined by the Internet Engineering Task Force (IETF) in RFC8615. A validation request may comprise an ACME DNS-01 challenge.

According to an eleventh aspect of the present disclosure, there is provided a system for performing secure communications between a first participant of a central signing service in a secure communications network system and a second participant of the central signing service over a public network, wherein the first participant in the system is configured to perform the method according to the ninth aspect and the second participant in the system is configured to perform the method according to the tenth aspect.

According to a twelfth aspect of the present disclosure, there is provided, a non-transitory computer-readable medium storing instructions that are operable when executed by data processing apparatus of a participant to perform the method according to the ninth aspect and/or the tenth aspect.

Preferably, any of the above aspects is implemented using elliptic curve cryptography.

The secure communications network system and method of the present disclosure has been described in different aspects of onboarding, signing and communicating between participant entities. Accordingly, the different aspects work together to provide the present secure communications network system and elements and/or method steps of one or more aspects may be combined with another aspect, as will be appreciated by a person skilled in the art.

### BRIEF DESCRIPTION OF DRAWINGS

Embodiments of the present invention are described below, by way of example only, with reference to the accompanying drawings, in which:
Figure 1 illustrates in schematic of the secure communications network system according to the present invention;
Figure 2 illustrates a schematic flow diagram showing an exemplary method for carrying out an aspect of the present invention; and
Figure 3 illustrates another schematic flow diagram showing an exemplary method for carrying out another aspect of the present invention.

### DETAILED DESCRIPTION

The following description is presented to enable any person skilled in the art to make and use the system, and is provided in the context of a particular application. Various modifications to the disclosed embodiments will be readily apparent to those skilled in the art.

As used herein, the following terms have the following meanings:
A "central signing service" is a certifying authority which provides a centralised service to issue digital signatures or certificates, such as DNS and endpoint signatures, as part of onboarding and signing processes. In order to generate digital signatures for participants, each participant of the present authentication scheme must be registered with, or onboarded by, the central signing service.

A "participant" is a user of the central signing service, to which digital signatures or certificates are issued to. The participant may have a domain with a domain name in a domain name system, DNS, to which the digital signatures may be applied.

A "key pair" or a public private key pair is a pair of cryptographic keys that are generated by a participant for the respective encrypting and decrypting of digital information. The public key is provided as public information and may be available for any entity to use. The public key may be used to encrypt a message and to validate or verify a digital signature of a participant. The private key is available only to the owner of the key pair, i.e. that participant that generated the key pair.

The private key may be used to decrypt messages that have been encrypted with the corresponding public key. The private key may also be used for the creation of a digital signature of a participant.

A "well-known endpoint" is a discoverable location for internet data or services, such as web addresses or uniform resource identifier (URI) schemes, which have a path prefix "/.well-known/". A well-known URI updates the "http" and "https" schemes to provide the well-known scheme to allow additional information, such as digital signatures or public keys, to be securely included. Further details for well-known endpoints and URIs can be found in RFC 8615 in the Internet Engineering Task Force (IETF).

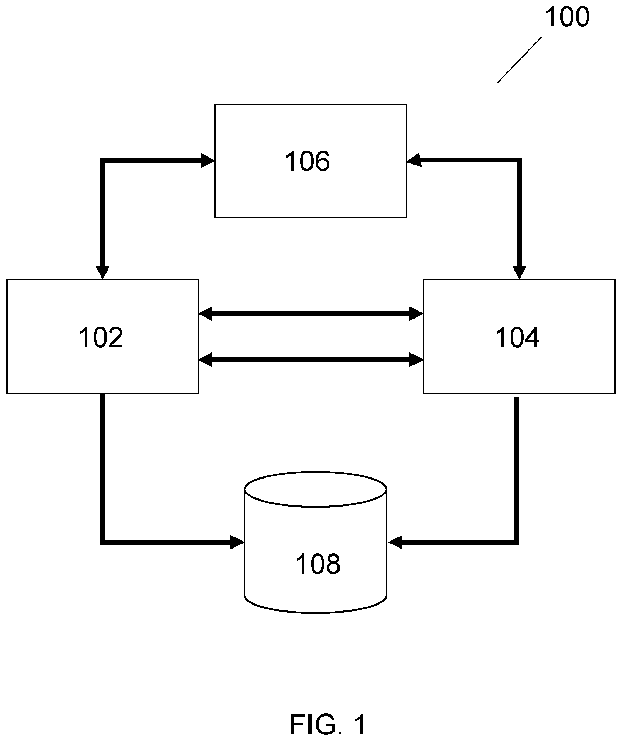

Figure 1 shows a schematic of the secure communications protocol 100 of the present disclosure. The protocol, or scheme, includes a first participant 102 and a second participant 104, where both the first and second participants are part of, or have been onboarded to, a central signing service 106. The first participant 102 and the second participant 104 also each have a domain in a domain name system, DNS, 108.

As will be understood, the protocol 100 may include a large number of participants and that a participant is an entity that wishes to make secure communications across the public internet using the protocol 100 to another entity. In this present case, both the first participant 102 and the second participant 104 are registered with the central signing service 106, as will be explained in further detail below with respect to the onboarding process.

A participant (i.e. the first participant 102 and the second participant 104) generates short-lived key pairs, such as public-private elliptic curve cryptographic key pairs, and publish the public keys of the key pairs on the public internet. The public keys are published on well-known endpoints, which are typically preassigned stable addresses of a server, and used for encryption of a request or response message and also used for signature verification. The private keys of the key pairs are used by a participant to decrypt a request or response message that is received and/or sent to another participant. The private key is also used for signature creation.

The central signing service 106 is operated by a trusted third party to play a crucial role in the secure communications protocol 100. The central signing service 106 provides signatures, such as DNS signatures, in the onboarding process to the first participant 102 and the second participant 104 for their respective domains. The DNS signature for a participant is stored in the domain's text, TXT, records, in a similar way to the ACME DNS-01 challenge process.

The central signing service 106 ensures the integrity and authenticity of the key pairs of the participants by the participants' association or registration with the central signing service 106. In other words, messages can only be sent and received using the present secure communications protocol 100 if the participants have been onboarded by the central signing service 106.

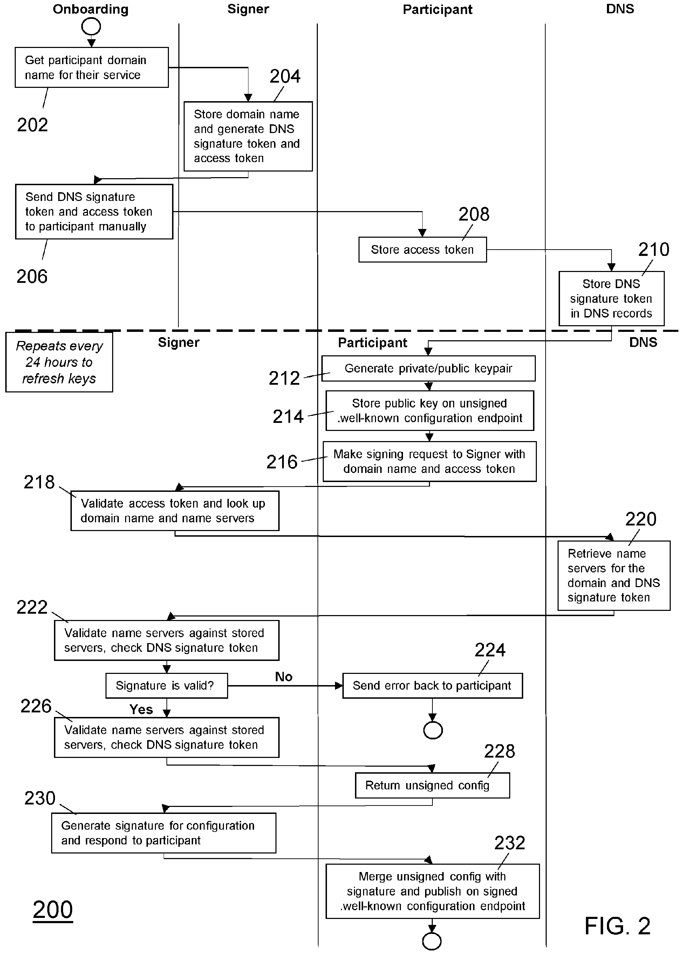

In order for a participant to obtain DNS signatures from the central signing service 106, each participant must undertake an onboarding process, as will be described in relation to Figure 2. Figure 2 shows a flow diagram of an onboarding and signing process 200 between the central signing service 106 and a participant.

The central signing service 106 acts as the trusted third party between participant communications and starts by collecting and approving, at step 202, the domain names for a participant (e.g. the first participant 102 and the second participant 104) through which a communication service is channelled. At step 204 an approved domain name of the participant is stored in a data store of the central signing service 106, and the central signing service 106 generates a DNS signature and an access token for the domain associated with the domain name, to be sent to the participant.

At step 206, the central signing service 106 sends the generated DNS signature and access token to the participant, where at step 208 the participant stores the access token in a data store of the participant and at step 210 stores the DNS signature in the DNS records, such as a text (TXT) record, in the DNS 108 to complete the onboarding process.

The signing process is a separate process to the above onboarding process and is described in the following steps in relation to a participant (which may the first participant 102 or the second participant 104) in generating a public-private key pair.

At step 212 the participant generates a new public-private key pair, such as an elliptic curve cryptography key pair, for the secure communications protocol 100. According to the present disclosure, the key pairs are short-lived and have a predetermined time period. In this specific example the predetermined time period is 24 hours, where the signing process described herein will repeat every 24 hours to rotate / refresh the key pairs of the participants. As will be appreciated by the skilled person, the predetermined time period may be longer or shorter than 24 hours. For example, the predetermined time period may be 6 hours, 12 hours, 18 hours, 25 hours, 30 hours or 72 hours.

At step 214, the participant hosts or stores the public key of the generated key pair on an unsigned endpoint, such as a web address. In this specific example, the endpoint is a "well-known endpoint", as that described RFC 8615. The well-known endpoint is accessible over the public internet and third parties will be able to see whether the well-known endpoint is signed or unsigned with a public key or digital certificate.

At step 216, the participant then creates a signing request for the unsigned well-known endpoint and sends the request to the central signing service 106 for a new endpoint signature. The signing request includes a domain name and the access token provided by the central signing service 106 to the participant during the onboarding process.

At step 218, the central signing service 106 validates the access token in the received signing request and looks up the domain name and name servers associated with the signing request, and then retrieves the name servers for the domain and a DNS signature token from the DNS 108 at step 220.

At step 222 the central signing service 106 validates the name servers against the stored servers in the data store of the central signing service and checks the DNS signature token. The validation involves the central signing service 106 using the DNS signature (generated and stored by the central signing service 106 in the onboarding process) to validate the domain name of the participant. If the validation check fails, i.e. where the central signing service 106 determines that the DNS signature and domain name is not valid, the central signing service 106 sends an error message back to the participant at step 224.

If the central signing service 106 determines that the DNS signature and domain name are valid, it retrieves a configuration of the unsigned well-known endpoint to sign at step 226 and returns the unsigned well-known endpoint configuration to the participant at step 228. The configuration of the unsigned well-known endpoint includes the unsigned public key of the participant stored in the unsigned well-known endpoint.

At step 230, the central signing service 106 then generates a new endpoint signature for the particular configuration of the unsigned well-known endpoint, signs the unsigned well-known endpoint and sends the new endpoint signature to the participant. It should therefore be understood that the purpose of the endpoint signature is to authenticate the public key of the participant (i.e. the public key of the newly generated key pair from step 212).

On receipt of the new endpoint signature, at step 232 the participant then stores and merges the new endpoint signature to the configuration in the unsigned well-known endpoint to provide a signed well-known endpoint. The new endpoint signature corresponds to the newly generated key pair (from step 212) and replaces any previous or old endpoint signatures in the well-known endpoint.

The signed well-known endpoint is then published by the participant such that a third party will see that the well-known endpoint is signed with a new endpoint signature to ensure secure communications.

It should be understood that in order for the first participant 102 and the second participant 104 to communicate securely with each other using the present secure communications scheme, both participants must go through the onboarding and signing process with the central signing service 106 as described above.

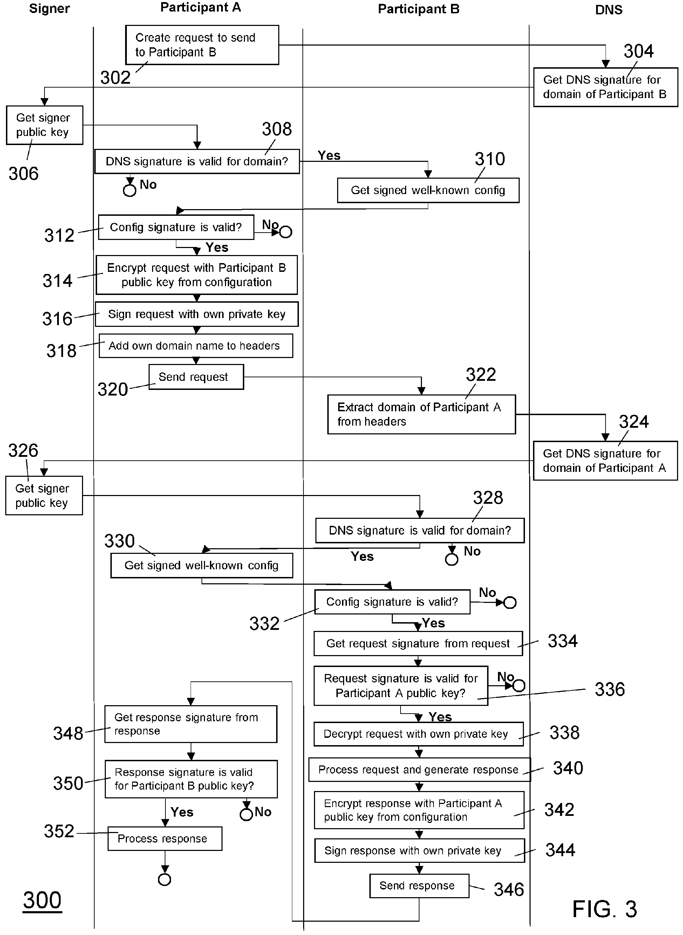

After the endpoint signing process described in reference to Figure 2, the first participant 102 and the second participant 104 can communicate with each other through request and response messages, as described below in reference to Figure 3. Figure 3 shows a flow diagram of request and response process 300 between first participant 102 and the second participant 104, along with the central signing service 106 and the DNS 108.

At step 302, the first participant 102 creates a request to send to the second participant 104, where at step 304 the first participant 102 retrieves a DNS signature from a TXT record in the domain associated with the second participant 102 in the DNS 108. At step 306, the first participant then retrieves a public key associated with the central signing service 106. The central signing service's 106 public key is hosted on the public internet and can be used to validate the second participant's DNS signature, since the DNS signature was generated using the central signing service's private key.

At step 308, the first participant 102 then validates the second participant's DNS signature against the public key of the central signing service 106. This validation confirms whether the second participant's DNS signature is valid for the domain associated with the second participant 102 and as such confirms whether the second participant is registered in the secure communications protocol 100 (i.e. has completed the onboarding process).

If the validation is unsuccessful, the communication channel to the second participant 104 is deemed by the first participant 102 to be insecure, and the communications process ceases. In other words, no further steps are performed if the validation is unsuccessful. This ensures that security of the communications protocol is fully maintained.

If the validation is successful, at step 310 the first participant 102 retrieves the second participant's public key and the endpoint signature in the configuration that is stored on the second participant's signed well-known endpoint.

At step 312 the first participant 102 validates the endpoint signature on the signed well-known endpoint with the public key retrieved from the central signing service at step 306. If the validation fails, the communication channel of the second participant 104 ceases.

When all validations are successful, the first participant 102 encrypts a request message with the second participant's public key at step 314 (obtained from the configuration of the signed well-known endpoint) and signs, or creates a signature for, the request message with a private key of the first participant's key pair at step 316. The domain name of the first participant is provided in the request message at step 318. The domain name and the request signature may be provided in the HTTP request headers for subsequent verification by the second participant. At step 320 the first participant 102 then sends the encrypted and signed request message to the second participant 104.

At step 322 the second participant 104 receives the request message from the first participant 102 and extracts the domain name associated with the first participant 102 from the message, e.g. from the HTTP request headers. Then at step 324, the second participant 104 retrieves the DNS signature from the TXT record in the domain of the first participant 102 from the DNS 108, as indicated by the extracted domain name.

At step 326, the second participant 104 retrieves the public key associated with the central signing service 106 and validates the DNS signature of the first participant using retrieved public key of the central signing service at step 328. If the validation is unsuccessful, the communication channel from the first participant 102 is deemed by the second participant 104 to be insecure, and the communications process ceases and no further steps are performed.

If the validation is successful, the second participant 104 then retrieves the endpoint signature and the first participant's public key from the configuration of the signed well-known endpoint of the first participant 102 at step 330, and validates the first participant's endpoint signature at step 332 using the public key retrieved at step 326. Again, if the endpoint signature validation fails, the communication channel of the first participant 102 is marked as or considered to be insecure by the second participant 104 and the process stops.

If the endpoint signature validation is successful, the second participant 104 retrieves the request signature from the request message at step 334 and performs a validation check on the request signature at step 336 using the first participant's public key (obtained at step 330). If the request signature validation fails, the communication channel of the first participant 102 is marked as or considered to be insecure by the second participant 104 and the process stops.

If the request signature validation is successful, the second participant 104 decrypts the request message from the first participant 102 with the second participant's private key at step 338. Then, at step 340, the second participant 104 processes the request message and generates a response message.

At step 342, the second participant encrypts the response message with the first participant's public key (obtained from the signed well-known endpoint, of the first participant at step 330) and signs (creates a response signature for) the response message with a private key of the second participant's key pair at step 344. The response signature and the domain name of the second participant 104 is provided in the response message. This information may be provided in the HTTP headers for subsequent verification by the first participant 102, and at step 346 the second participant 104 sends the encrypted and signed response message to the first participant 102.

At step 348, the first participant 102 receives the response message from the second participant 104 and retrieves the response signature from the message. At step 350, the first participant 102 then validates the response signature in the response message using the second participant's public key. If the response signature validation is unsuccessful, the communication process ceases.

If the response signature validation is successful, the first participant 102 decrypts the response message using the first participant's private key and processes the response message at step 352.

### Worked Examples

In this section, examples of the present disclosure in the context of making a payment for a restaurant bill and the sharing a sensitive medical information are described.

### Example 1

A restaurant is visited by a customer (or a group of customers) that wish to pay electronically through the present secure communications protocol. In this example, the restaurant's bank and the customer's bank (or each of the customers' respective banks) are participants of a central signing service.

As users of the present secure communications protocol, both the restaurant's and the customer's banks have completed the onboarding process described above, and accordingly each generate a new public private key pair every 24 hours. The restaurant and the customer each respectively operates an app provided by their respective bank to use the secure communications protocol to separately request a new endpoint signature from the central signing service every time a new public private key pair is generated. As will be appreciated by the skilled person, the respective banking apps for the customer and the restaurant will be in communication with respective servers to perform the secure communications process.

To pay the restaurant's bill, the restaurant may provide the customer a web address (which may be in the form of QR code or specific web address that is generated in connection with the restaurant's banking app) that is specifically for the customer's bill. If there are more than one customer, i.e. a group of customers, the same web address may be provided to each customer in the group. The web address will include the information relating to restaurant's digital signature information (i.e. in a TXT record in the restaurant domain) and a public key.

The customer uses the customer's banking app on their electronic device, such as their smartphone, to access the restaurant's web address, to retrieve the restaurant's DNS signature, and to communicate with the central signing service to retrieve the public key of the central signing service to validate the restaurant's DNS signature and endpoint signature of the restaurant's web address.

After successful validation, the customer's banking app sends an encrypted and signed message to the restaurant's banking app to confirm that the customer is requesting to make an electronic payment. The customer device encrypts the message with the restaurant's banking app public key and signs the message with a request signature using the customer's banking app private key. The customer message may also provide some customer-specific information, such as an amount that the customer is paying. In the case of a group of customers, each individual customer may therefore provide differing amounts for payment in their respective messages.

The restaurant's banking app performs its own validations of the customer's message, by retrieving the customer's DNS signature and endpoint configuration from the information provided in the customer's encrypted message. The restaurant's banking app communicates with the central signing service to obtain the public key associated with the central signing service and performs the relevant validations. The restaurant's banking app also validates the request signature using the customer's banking app public key.

After successful validations, the restaurant's banking app decrypts the customer's message using the restaurant's banking app private key and processes the decrypted message. For instance, the restaurant's banking app may determine the amount that the customer wishes to pay.

The restaurant's banking app may then generate a specific payment page, with the processed information (e.g. specific payment amount), and encrypt and sign the payment page information in a response message. The restaurant encrypts the message with the customer's banking app public key and signs the message with the restaurant's banking app private key. The encrypted and signed response message is then sent by the restaurant's server to the customer's banking app, where the customer's device will validate the response message using the restaurant's banking app public key (which corresponds with the restaurant's private key in the signed response message) to confirm that a secure communication channel has been established.

The customer can then proceed to decrypt the response message using the customer's banking app private key and make a payment to the restaurant using the secure communication channel, e.g. by sending the customer's payment and security details.

### Example 2

The present secure communications protocol may also be applied to share sensitive information, for example medical data between a general hospital server and a local medical practice. As above, both the general hospital and the local medical practice are participants of the secure communications protocol and have completed the onboarding and signing process with the central signing service. The general hospital and the local medical practice each respectively operates an app to use the secure communications protocol and to separately request a new endpoint signature from the central signing service every time a new public private key pair is generated. As will be appreciated by the skilled person, the respective apps for the general hospital and the local medical practice will be in communication with respective servers to perform the secure communications process.

In this example, the general hospital is seeking to share new medical data for a patient to the local medical practice of the patient, but it should be understood that the roles may be reversed so that the local medical practice seeks to share medical information to the general hospital.

A general hospital device accesses a domain of the local medical practice to obtain the local medical practice's digital DNS signature information. The general hospital device then validates the retrieved DNS signature with a public key of the central signing service. The general hospital device then accesses a well-known endpoint of the local medical practice to obtain the public key hosted on the local medical practice sever to perform additional validation on the endpoint signature.

After successfully validating the DNS signature and the endpoint signature of the local medical practice, the general hospital device then prepares an encrypted and signed message for the local medical practice to request the sending of sensitive medical information, encrypting the message with the local medical practice's public key and signing the message with the general hospital's private key, and sends the encrypted and signed message to the local medical practice. The request message may include patient-specific information, such as the name and date of birth, or address of the patient.

The local medical practice will then receive the request message from the general hospital, and to ensure that message is authentic the local medical practice's server will validate the general hospital's DNS signature, endpoint signature and request signature in the manners previously described

After successful validation, the local medical practice decrypts and processes the request message. For example, the local medical practice will determine the intended patient associated with the medical data to be shared.

The local medical practice will then generate a specific patient medical information response message, encrypting the message with the general hospital's public key and signing the message with the local medical practice's private key, and sends the encrypted and signed response message to the general hospital.

The general hospital can then validate the response message using the local medical practice's public key (which corresponds with the local medical practice's private key in the signed response message) to confirm that a secure communication channel has been established.

The general hospital can then proceed to decrypt the response message using the local medical practice's private key and send the patient's sensitive medical information to the local medical practice through the established secure communication channel.

Other embodiments will be apparent to those skilled in the art from consideration of the specification and practice of the embodiments disclosed herein. It is intended that the specification and examples be considered as exemplary only.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, compact discs (CDs), digital versatile discs (DVDs), or other media that are capable of storing code and/or data.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

User devices can include, without limitation, static user devices such as PCs and mobile user devices such as smartphones, tablets, laptops and smartwatches.

It will be appreciated that the embodiments described herein are purely illustrative and hence are susceptible to many modifications, substitutions, additions and the like. All such modifications, substitutions and additions are within the scope of the invention which is defined by the appended claims. Method steps described in this specification may be implemented in any order, in parallel or sequentially, unless specifically stated otherwise.

## Claims

1. A computer-implemented method for performing secure communications between a first participant (102) of a central signing service in a secure communications network system and a second participant (104) of the central signing service (106) over a public network, the method performed by the first participant comprising the steps of:
generating (302) a request message to send to the second participant;
retrieving (304) a domain name system, DNS, signature from a text, TXT, record from a domain associated with the second participant;
retrieving (306) a first public key, wherein the first public key is associated with the central signing service and part of a first key pair used to generate the DNS signature;
validating (308) the DNS signature against the first public key;
upon successful validation of the DNS signature,
retrieving (310) a second public key and an endpoint signature from an endpoint associated with the second participant, wherein the endpoint signature is generated by the central signing service using the first key pair, and wherein the second public key is associated with the second participant and configured to be valid for a first predetermined time period;
validating (312) the endpoint signature using the first public key;
upon successful validation of the endpoint signature;
encrypting (314) the request message using the second public key;
signing (316) the encrypted request message with a request signature using a private key, wherein the private key is associated with the first participant and configured to be valid for a second predetermined time period;
sending (320) the signed encrypted request message to the second participant, wherein the signed encrypted request message comprises the request signature and a domain name associated with the first participant;
receiving (348) a signed encrypted response message from the second participant;
validating (350) the signed encrypted response message using the second public key;
decrypting (352) the signed encrypted response message using the private key; and
processing (352) the signed decrypted response message,
wherein the sending of the signed encrypted request message is within both the first predetermined time period and the second predetermined time period.

2. The method of claim 1, wherein each of the first predetermined time period and/or the second predetermined time period is between 12 hours to 48 hours, preferably wherein each predetermined time period is 24 hours.

3. The method of claims 1 or 2 further comprising:
generating (212) a key pair associated with the first participant (102), the key pair comprising the private key and a corresponding public key, wherein the key pair is configured to be valid for the second predetermined period of time.

4. The method of claim 3 further comprising:
revoking a previous private key and a previous public key of a previous key pair associated with the first participant (102) on generating the key pair.

5. The method of claims 3 or 4 further comprising:
storing (214) the corresponding public key in a configuration of an endpoint of a domain associated with the first participant (102).

6. The method of any of the preceding claims further comprising:
receiving (230)an endpoint signature for a configuration of the endpoint of the domain associated with the first participant (102) from the central signing service (106); and
merging (232) the endpoint signature with the configuration to provide a signed endpoint associated with the first participant.

7. A computer-implemented method for performing secure communications between a first participant (102) of a central signing service (106) and a second participant (104) of the central signing service over a public network, the method performed by the second participant comprising the steps of:
receiving (320) a signed encrypted request message from the first participant, wherein the signed encrypted request message comprises a request signature and a domain name associated with the first participant;
extracting (322) the domain name and the request signature from the signed encrypted request message, the domain name associated with a domain, the domain associated with the first participant;
retrieving (324) a domain name system, DNS, signature from a text, TXT, record from the domain;
retrieving (326) a first public key, wherein the first public key is associated with the central signing service and part of a first key pair used to generate the DNS signature;
validating (328) the DNS signature against the first public key;
upon successful validation of the DNS signature,
retrieving (330) a second public key and an endpoint signature from an endpoint associated with the first participant, wherein the endpoint signature is generated by the central signing service using the first key pair, and wherein the second public key is associated with the first participant and configured to be valid for a first predetermined time period;
validating (332) the endpoint signature using the first public key;
upon successful validation of the endpoint signature;
validating (336) the request signature using the second public key;
upon successful validation of the request signature;
decrypting (338) the signed encrypted request message using a private key, wherein the private key is associated with the second participant and configured to be valid for a second predetermined time period;
processing (340) the signed decrypted request message;
generating (340) a response message to send to the first participant;
encrypting (342) the response message using the second public key;
signing (344) the encrypted response message with a response signature using the private key; and
sending (346) the signed encrypted response message to the first participant, wherein the signed encrypted response message comprises the response signature,
wherein the sending of the signed encrypted response message is within both the first predetermined time period and the second predetermined time period.

8. The method of claim 7, wherein each of the first predetermined time period and/or the second predetermined time period is between 12 hours to 48 hours, preferably wherein each predetermined time period is 24 hours.

9. The method of claims 7 or 8 further comprising:
generating (212) a key pair associated with the second participant (104), the key pair comprising the private key and a corresponding public key, wherein the key pair is configured to be valid for the second predetermined period of time.

10. The method of claim 9 further comprising:
revoking a previous private key and a previous public key of a previous key pair associated with the second participant (104) on generating the key pair.

11. The method of claims 9 or 10 further comprising:
storing (214) the corresponding public key in a configuration of an endpoint of a domain associated with the second participant (104).

12. The method of any of claims 7 to 11 further comprising:
receiving (230) an endpoint signature for a configuration of the endpoint of the domain associated with the second participant (104) from the central signing service; and
merging (232) the endpoint signature with the configuration to provide a signed endpoint associated with the second participant.

13. The method of any of the preceding claims, wherein the endpoint is a uniform resource location starting with a prefix /.well-known/.

14. A system for performing secure communications between a first participant (102) of a central signing service (106) in a secure communications network system and a second participant (104) of the central signing service over a public network, wherein the first participant in the system is configured to perform the method of any of claims 1 to 6 and the second participant in the system is configured to perform the method of any of claims 7 to 13.

15. A non-transitory computer-readable medium storing instructions that are operable when executed by data processing apparatus of a participant in a secure communications system to perform the method of any of claims 1 to 13.

## Patentansprüche

1. Computerimplementiertes Verfahren zum Durchführen sicheren Kommunikationen zwischen einem ersten Teilnehmer (102) eines zentralen Signierdienstes in einem sicheren Kommunikationsnetzsystem und einem zweiten Teilnehmer (104) des zentralen Signierdienstes (106) über ein öffentliches Netz, wobei das von dem ersten Teilnehmer durchgeführte Verfahren die folgenden Schritte umfasst:
Erzeugen (302) einer Anforderungsnachricht, die an den zweiten Teilnehmer gesendet werden soll;
Abrufen (304) einer Domain Name System, DNS, Signatur aus einem Text, TXT, Datensatz von einer mit dem zweiten Teilnehmer assoziierten Domain;
Abrufen (306) eines ersten öffentlichen Schlüssels, wobei der erste öffentliche Schlüssel mit dem zentralen Signierdienst assoziiert und Teil eines ersten Schlüsselpaares ist, das zum Erzeugen der DNS-Signatur verwendet wird;
Validieren (308) der DNS-Signatur gegen den ersten öffentlichen Schlüssel;
bei erfolgreicher Validierung der DNS-Signatur,
Abrufen (310) eines zweiten öffentlichen Schlüssels und einer Endpunktsignatur von einem Endpunkt, der mit dem zweiten Teilnehmer assoziiert ist, wobei die Endpunktsignatur von dem zentralen Signierdienst unter Verwendung des ersten Schlüsselpaares erzeugt wird, und wobei der zweite öffentliche Schlüssel mit dem zweiten Teilnehmer assoziiert ist und konfiguriert ist, um für einen ersten vorbestimmten Zeitraum gültig zu sein;
Validieren (312) der Endpunktsignatur unter Verwendung des ersten öffentlichen Schlüssels;
bei erfolgreicher Validierung der Endpunktsignatur;
Verschlüsseln (314) der Anforderungsnachricht unter Verwendung des zweiten öffentlichen Schlüssels;
Signieren (316) der verschlüsselten Anforderungsnachricht mit einer Anforderungssignatur unter Verwendung eines privaten Schlüssels, wobei der private Schlüssel mit dem ersten Teilnehmer assoziiert und konfiguriert ist, um für einen zweiten vorbestimmten Zeitraum gültig zu sein;
Senden (320) der signierten verschlüsselten Anforderungsnachricht an den zweiten Teilnehmer, wobei die signierte verschlüsselte Anforderungsnachricht die Anforderungssignatur und einen mit dem ersten Teilnehmer assoziierten Domainnamen umfasst;
Empfangen (348) einer signierten verschlüsselten Antwortnachricht von dem zweiten Teilnehmer;
Validieren (350) der signierten verschlüsselten Antwortnachricht unter Verwendung des zweiten öffentlichen Schlüssels;
Entschlüsseln (352) der signierten verschlüsselten Antwortnachricht unter Verwendung des privaten Schlüssels; und
Verarbeiten (352) der signierten entschlüsselten Antwortnachricht,
wobei Senden der signierten verschlüsselten Anforderungsnachricht sowohl innerhalb des ersten vorbestimmten Zeitraums als auch innerhalb des zweiten vorbestimmten Zeitraums ist.

2. Verfahren nach Anspruch 1, wobei jeder des ersten vorbestimmten Zeitraums und/oder des zweiten vorbestimmten Zeitraums zwischen 12 Stunden und 48 Stunden ist, vorzugsweise wobei jeder vorbestimmte Zeitraum 24 Stunden ist.

3. Verfahren nach Anspruch 1 oder 2, weiter umfassend:
Erzeugen (212) eines mit dem ersten Teilnehmer (102) assoziierten Schlüsselpaares, wobei das Schlüsselpaar den privaten Schlüssel und einen entsprechenden öffentlichen Schlüssel umfasst, wobei das Schlüsselpaar konfiguriert ist, um für den zweiten vorbestimmten Zeitraum gültig zu sein.

4. Verfahren nach Anspruch 3, weiter umfassend:
Widerrufen eines vorherigen privaten Schlüssels und eines vorherigen öffentlichen Schlüssels eines vorherigen Schlüsselpaares, das mit dem ersten Teilnehmer (102) assoziiert ist, beim Erzeugen des Schlüsselpaares.

5. Verfahren nach Anspruch 3 oder 4, weiter umfassend:
Speichern (214) des entsprechenden öffentlichen Schlüssels in einer Konfiguration eines Endpunkts einer Domain, die mit dem ersten Teilnehmer (102) assoziiert ist.

6. Verfahren nach einem der vorstehenden Ansprüche, weiter umfassend:
Empfangen (230) einer Endpunktsignatur für eine Konfiguration des Endpunkts der Domain, die mit dem ersten Teilnehmer (102) assoziiert ist, von dem zentralen Signierdienst (106); und
Zusammenführen (232) der Endpunktsignatur mit der Konfiguration, um einen signierten Endpunkt bereitzustellen, der mit dem ersten Teilnehmer assoziiert ist.

7. Computerimplementiertes Verfahren zum Durchführen von sicheren Kommunikationen zwischen einem ersten Teilnehmer (102) eines zentralen Signierdienstes (106) und einem zweiten Teilnehmer (104) des zentralen Signierdienstes über ein öffentliches Netzwerk, wobei das von dem zweiten Teilnehmer durchgeführte Verfahren die folgenden Schritte umfasst:
Empfangen (320) einer signierten verschlüsselten Anforderungsnachricht von dem ersten Teilnehmer, wobei die signierte verschlüsselte Anforderungsnachricht eine Anforderungssignatur und einen mit dem ersten Teilnehmer assoziierten Domainnamen umfasst;
Extrahieren (322) des Domainnamens und der Anforderungssignatur aus der signierten verschlüsselten Nachricht, wobei der Domainname mit einer Domain assoziiert ist, die mit dem ersten Teilnehmer assoziiert ist;
Abrufen (324) einer Domain Name System, DNS, Signatur aus einem Text, TXT, Datensatz der Domain;
Abrufen (326) eines ersten öffentlichen Schlüssels, wobei der erste öffentliche Schlüssel mit dem zentralen Signierdienst assoziiert und Teil eines ersten Schlüsselpaares ist, das zum Erzeugen der DNS-Signatur verwendet wird;
Validieren (328) der DNS-Signatur gegen den ersten öffentlichen Schlüssel;
bei erfolgreicher Validierung der DNS-Signatur,
Abrufen (330) eines zweiten öffentlichen Schlüssels und einer Endpunktsignatur von einem Endpunkt, der mit dem ersten Teilnehmer assoziiert ist, wobei die Endpunktsignatur von dem zentralen Signierdienst unter Verwendung des ersten Schlüsselpaares erzeugt wird, und wobei der zweite öffentliche Schlüssel mit dem ersten Teilnehmer assoziiert ist und konfiguriert ist, um für einen ersten vorbestimmten Zeitraum gültig zu sein;
Validieren (332) der Endpunktsignatur unter Verwendung des ersten öffentlichen Schlüssels;
bei erfolgreicher Validierung der Endpunktsignatur;
Validieren (336) der Anforderungssignatur unter Verwendung des zweiten öffentlichen Schlüssels;
bei erfolgreicher Validierung der Anforderungssignatur;
Entschlüsseln (338) der signierten, verschlüsselten Anforderungsnachricht unter Verwendung eines privaten Schlüssels, wobei der private Schlüssel mit dem zweiten Teilnehmer assoziiert und konfiguriert ist, um für einen zweiten vorbestimmten Zeitraum gültig zu sein;
Verarbeiten (340) der signierten, entschlüsselten Anforderungsnachricht;
Erzeugen (340) einer Antwortnachricht, die an den ersten Teilnehmer gesendet wird;
Verschlüsseln (342) der Antwortnachricht unter Verwendung des zweiten öffentlichen Schlüssels;
Signieren (344) der verschlüsselten Antwortnachricht mit einer Antwortsignatur unter Verwendung des privaten Schlüssels; und
Senden (346) der signierten verschlüsselten Antwortnachricht an den ersten Teilnehmer, wobei die signierte verschlüsselte Antwortnachricht die Antwortsignatur umfasst,
wobei Senden der signierten verschlüsselten Antwortnachricht sowohl innerhalb des ersten vorbestimmten Zeitraums als auch innerhalb des zweiten vorbestimmten Zeitraums ist.

8. Verfahren nach Anspruch 7, wobei jeder des ersten vorbestimmten Zeitraums und/oder des zweiten vorbestimmten Zeitraums zwischen 12 Stunden und 48 Stunden ist, vorzugsweise wobei jeder vorbestimmte Zeitraum 24 Stunden ist.

9. Verfahren nach Anspruch 7 oder 8, weiter umfassend:
Erzeugen (212) eines mit dem zweiten Teilnehmer (104) assoziierten Schlüsselpaares, wobei das Schlüsselpaar den privaten Schlüssel und einen entsprechenden öffentlichen Schlüssel umfasst, wobei das Schlüsselpaar konfiguriert ist, um für den zweiten vorbestimmten Zeitraum gültig zu sein.

10. Verfahren nach Anspruch 9, weiter umfassend:
Widerrufen eines vorherigen privaten Schlüssels und eines vorherigen öffentlichen Schlüssels eines vorherigen Schlüsselpaares, das mit dem zweiten Teilnehmer (104) assoziiert ist, beim Erzeugen des Schlüsselpaares.

11. Verfahren nach Anspruch 9 oder 10, weiter umfassend:
Speichern (214) des entsprechenden öffentlichen Schlüssels in einer Konfiguration eines Endpunkts einer Domain, die mit dem zweiten Teilnehmer (104) assoziiert ist.

12. Verfahren nach einem der Ansprüche 7 bis 11, weiter umfassend:
Empfangen (230) einer Endpunktsignatur für eine Konfiguration des Endpunkts der Domain, die mit dem zweiten Teilnehmer (104) assoziiert ist, von dem zentralen Signierdienst; und
Zusammenführen (232) der Endpunktsignatur mit der Konfiguration, um einen signierten Endpunkt bereitzustellen, der mit dem zweiten Teilnehmer assoziiert ist.

13. Verfahren nach einem der vorstehenden Ansprüche, wobei der Endpunkt ein einheitlicher Ressourcenstandort ist, der mit einem Präfix /.well-known/ startet.

14. System zum Durchführen sicheren Kommunikationen zwischen einem ersten Teilnehmer (102) eines zentralen Signierdienstes (106) in einem sicheren Kommunikationsnetzwerksystem und einem zweiten Teilnehmer (104) des zentralen Signierdienstes über ein öffentliches Netzwerk, wobei der erste Teilnehmer in dem System konfiguriert ist, um das Verfahren nach einem der Ansprüche 1 bis 6 durchzuführen und der zweite Teilnehmer in dem System konfiguriert ist, um das Verfahren nach einem der Ansprüche 7 bis 13 durchzuführen.

15. Nicht transitorisches computerlesbares Medium, das Anweisungen speichert, die, wenn sie von einer Datenverarbeitungseinrichtung eines Teilnehmers in einem sicheren Kommunikationssystem ausgeführt werden, betreibbar sind, um das Verfahren nach einem der Ansprüche 1 bis 13 durchzuführen.

## Revendications

1. Procédé mis en œuvre par ordinateur pour la réalisation de communications sécurisées entre un premier participant (102) d'un service de signature central dans un système de réseau de communication sécurisé et un second participant (104) du service (106) de signature central sur un réseau public, le procédé réalisé par le premier participant comprenant les étapes suivantes :
la génération (302) d'un message de demande à envoyer au second participant ;
la récupération (304) d'une signature de système de nom de domaine, DNS, à partir d'un enregistrement de texte, TXT, à partir d'un domaine associé au second participant ;
la récupération (306) d'une première clé publique, dans lequel la première clé publique est associée au service de signature central et fait partie d'une première paire de clés utilisée pour générer la signature DNS ;
la validation (308) de la signature DNS par rapport à la première clé publique ;
après validation réussie de la signature DNS,
la récupération (310) d'une seconde clé publique et d'une signature de point d'extrémité à partir d'un point d'extrémité associé au second participant, dans lequel la signature de point d'extrémité est générée par le service de signature central en utilisant la première paire de clés, et dans lequel la seconde clé publique est associée au second participant et configurée pour être valide pendant une première période de temps prédéterminée ;
la validation (312) de la signature de point d'extrémité en utilisant la première clé publique ;
après validation réussie de la signature de point d'extrémité ;
le chiffrement (314) du message de demande en utilisant la seconde clé publique ;
la signature (316) du message de demande chiffré avec une signature de demande en utilisant une clé privée, dans lequel la clé privée est associée au premier participant et configurée pour être valide pendant une seconde période de temps prédéterminée ;
l'envoi (320) du message de demande chiffré signé au second participant, dans lequel le message de demande chiffré signé comprend la signature de demande et un nom de domaine associé au premier participant ;
la réception (348) d'un message de réponse chiffré signé à partir du second participant ;
la validation (350) du message de réponse chiffré signé en utilisant la seconde clé publique ;
le déchiffrement (352) du message de réponse chiffré signé en utilisant la clé privée ; et
le traitement (352) du message de réponse déchiffré signé,
dans lequel l'envoi du message de demande chiffré signé se situe à la fois dans la première période de temps prédéterminée et dans la seconde période de temps prédéterminée.

2. Procédé selon la revendication 1, dans lequel chacune de la première période de temps prédéterminée et/ou de la seconde période de temps prédéterminée est comprise entre 12 heures et 48 heures, de préférence dans lequel chaque période de temps prédéterminée est de 24 heures.

3. Procédé selon la revendication 1 ou la revendication 2, comprenant en outre :
la génération (212) d'une paire de clés associée au premier participant (102), la paire de clés comprenant la clé privée et une clé publique correspondante, dans lequel la paire de clés est configurée pour être valide pendant la seconde période de temps prédéterminée ;

4. Procédé selon la revendication 3, comprenant en outre :
la révocation d'une clé privée précédente et d'une clé publique précédente d'une paire de clés précédente associée au premier participant (102) lors de la génération de la paire de clés.

5. Procédé selon la revendication 3 ou la revendication 4, comprenant en outre :
le stockage (214) de la clé publique correspondante dans une configuration d'un point d'extrémité d'un domaine associé au premier participant (102).

6. Procédé selon l'une quelconque des revendications précédentes, comprenant en outre :
la réception (230) d'une signature de point d'extrémité pour une configuration du point d'extrémité du domaine associé au premier participant (102) à partir du service (106) de signature central ; et
la fusion (232) de la signature de point d'extrémité avec la configuration pour fournir un point d'extrémité signé associé au premier participant.

7. Procédé mis en œuvre par ordinateur pour la réalisation de communications sécurisées entre un premier participant (102) d'un service (106) de signature central et un second participant (104) du service de signature central sur un réseau public, le procédé réalisé par le second participant comprenant les étapes suivantes :
la réception (320) d'un message de demande chiffré signé à partir du premier participant, dans lequel le message de demande chiffré signé comprend une signature de demande et un nom de domaine associé au premier participant ;
l'extraction (322) du nom de domaine et de la signature de demande à partir du message de demande chiffré signé, le nom de domaine étant associé à un domaine, le domaine étant associé au premier participant ;
la récupération (324) d'une signature de système de nom de domaine, DNS, à partir d'un enregistrement de texte, TXT, à partir du domaine ;
la récupération (326) d'une première clé publique, dans lequel la première clé publique est associée au service de signature central et fait partie d'une première paire de clés utilisée pour générer la signature DNS ;
la validation (328) de la signature DNS par rapport à la première clé publique ;
après validation réussie de la signature DNS,
la récupération (330) d'une seconde clé publique et d'une signature de point d'extrémité à partir d'un point d'extrémité associé au premier participant, dans lequel la signature de point d'extrémité est générée par le service de signature central en utilisant la première paire de clés, et dans lequel la seconde clé publique est associée au premier participant et configurée pour être valide pendant une première période de temps prédéterminée ;
la validation (332) de la signature de point d'extrémité en utilisant la première clé publique ;
après validation réussie de la signature de point d'extrémité ;
la validation (336) de la signature de demande en utilisant la seconde clé publique ;
après validation réussie de la signature de demande ;
le déchiffrement (338) du message de demande chiffré signé en utilisant une clé privée, dans lequel la clé privée est associée au second participant et configurée pour être valide pendant une seconde période de temps prédéterminée ;
le traitement (340) du message de demande déchiffré signé ;
la génération (340) d'un message de réponse à envoyer au premier participant ;
le chiffrement (342) du message de réponse en utilisant la seconde clé publique ;
la signature (344) du message de réponse chiffré avec une signature de réponse en utilisant la clé privée ; et
l'envoi (346) du message de réponse chiffré signé au premier participant, dans lequel le message de réponse chiffré signé comprend la signature de réponse,
dans lequel l'envoi du message de réponse chiffré signé se situe à la fois dans la première période de temps prédéterminée et dans la seconde période de temps prédéterminée.

8. Procédé selon la revendication 7, dans lequel chacune de la première période de temps prédéterminée et/ou de la seconde période de temps prédéterminée est comprise entre 12 heures et 48 heures, de préférence dans lequel chaque période de temps prédéterminée est de 24 heures.

9. Procédé selon la revendication 7 ou la revendication 8, comprenant en outre :
la génération (212) d'une paire de clés associée au second participant (104), la paire de clés comprenant la clé privée et une clé publique correspondante, dans lequel la paire de clés est configurée pour être valide pendant la seconde période de temps prédéterminée ;

10. Procédé selon la revendication 9, comprenant en outre :
la révocation d'une clé privée précédente et d'une clé publique précédente d'une paire de clés précédente associée au second participant (104) lors de la génération de la paire de clés.

11. Procédé selon la revendication 9 ou la revendication 10, comprenant en outre :
le stockage (214) de la clé publique correspondante dans une configuration d'un point d'extrémité d'un domaine associé au second participant (104).

12. Procédé selon l'une quelconque des revendications 7 à 11, comprenant en outre :
la réception (230) d'une signature de point d'extrémité pour une configuration du point d'extrémité du domaine associé au second participant (104) à partir du service de signature central ; et
la fusion (232) de la signature de point d'extrémité avec la configuration pour fournir un point d'extrémité signé associé au second participant.

13. Procédé selon l'une quelconque des revendications précédentes, dans lequel le point d'extrémité est un localisateur de ressources uniforme commençant avec un préfixe /.well-known/.

14. Système pour la réalisation de communications sécurisées entre un premier participant (102) d'un service (106) de signature central dans un système de réseau de communication sécurisé et un second participant (104) du service de signature central sur un réseau public, dans lequel le premier participant dans le système est configuré pour réaliser le procédé selon l'une quelconque des revendications 1 à 6 et le second participant dans le système est configuré pour réaliser le procédé selon l'une quelconque des revendications 7 à 13.

15. Support non transitoire lisible par ordinateur stockant des instructions qui sont exploitables lorsqu'elles sont exécutées par un appareil de traitement de données d'un participant dans un système de communication sécurisé pour réaliser le procédé selon l'une quelconque des revendications 1 à 13.
